# EUROPÄISCHE PATENTSCHRIFT

(11) **EP 4 059 868 B1**
(45) Veröffentlichungstag und Bekanntmachung des Hinweises auf die Patenterteilung: **24.04.2024**
(21) Anmeldenummer: 21163691.5
(22) Anmeldetag: 19.03.2021
(51) Int. Cl.: B65G 1/08, B62B 3/08, B65G 65/00

(54) **TRANSPORTEINHEIT, ROUTENZUG, SYSTEM ZUM TRANSPORT VON FÖRDERGUT UND VERFAHREN ZUM TRANSPORT VON FÖRDERGUT**
TRANSPORT UNIT, ROUTE TRAIN, SYSTEM FOR TRANSPORTING ARTICLES AND METHOD FOR TRANSPORTING ARTICLES
UNITÉ DE TRANSPORT, TRAIN DE ROUTE, SYSTÈME DE TRANSPORT DES PRODUITS À TRANSPORTER ET PROCÉDÉ DE TRANSPORT DES PRODUITS À TRANSPORTER

(43) Veröffentlichungstag der Anmeldung: 21.09.2022
(73) Patentinhaber: LKE Gesellschaft für Logistik- und Kommunikations- Equipment mbH, 45768 Marl (DE)
(72) Erfinder: RIECHERS, Björn, 48455 Bad Bentheim (DE)
(74) Vertreter: Brinkmann & Partner

(56) Entgegenhaltungen:
- EP-A1- 2 524 882
- DE-A1-102015 005 039
- DE-A1-102015 007 861
- DE-A1-102017 006 280
- DE-U1-202018 101 774
- JP-A- 2005 313 870
- JP-A- 2017 065 851
- US-A1- 2016 220 038
- US-A1- 2020 122 927

## Beschreibung

Die Erfindung betrifft eine Transporteinheit mit einem Fahrgestell, auf dem ein Traggestell mit mehreren, zumindest zwei übereinander angeordneten, lasttragfähigen Aufnahmeelementen für zu transportierendes Fördergut angeordnet ist, wobei die Aufnahmeelemente um eine Längsachse relativ zum Traggestell verstellbar angeordnet sind. Die Erfindung betrifft ferner einen Routenzug mit mehreren Transporteinheiten und des Weiteren ein System zum Transport von Fördergut mit zumindest einer Transporteinheit sowie ein Verfahren zum Transport von Fördergut mit zumindest einer, Aufnahmeelemente aufweisenden Transporteinheit.

Es ist aus dem Stand der Technik bekannt, dass die logistische Versorgung bei der Fließbandbestückung und/oder bei Produktionsbetrieben oftmals über sogenannte Routenzüge erfolgt, welche gewöhnlicher Weise eine Zugmaschine und eine Mehrzahl von Anhängern, sogenannten Transporteinheiten aufweisen. Die Zugmaschine kann dabei auch integraler Bestandteil einer Transporteinheit sein. Diese Routenzüge bzw. deren Transporteinheiten müssen beladen und an vorgesehenen Versorgungsstellen entladen werden, wobei derartige Routenzüge möglichst autonom betrieben werden sollen. Neben der Möglichkeit diese Routenzüge manuell zu betätigen ist es angestrebt, einen vollautomatischen Betrieb eines solchen Routenzuges zu ermöglichen, bei dem sowohl die Beladung als auch die Entladung der Transporteinheiten mannlos erfolgen kann. Hierdurch werden Gefahrenstellen im Bereich des Transportweges eines Routenzuges reduziert und darüber hinaus auch die erforderliche Anzahl von Mitarbeitern im Bereich der logistischen Versorgung deutlich reduziert. Gleiches gilt im Übrigen auch für andere Anwendungsgebiete, wie eine Regalbefüllung in Supermärkten.

Die DE 10 2015 005039 A1 offenbart eine Transporteinheit nach dem Oberbegriff des Anspruchs 1.

Aus der DE 10 2016 212 628 A1 ist eine gattungsgemäße Transporteinheit bekannt, die aus einem fahrbaren Gestell sowie einem seilgeführten Handhabungssystem besteht. Das fahrbare Gestell weist zumindest eine Aufnahmefläche zur Aufnahme von Fördergut auf. Bei dem Fördergut kann es sich um beliebiges Handhabungsgut, wie zum Beispiel Kleinteilladungsträger, handeln. Vorzugsweise weist das fahrbare Gestell eine Mehrzahl von Aufnahmeflächen zur Aufnahme von Fördergut auf. Das fahrbare Gestell kann zum Beispiel eine Mehrzahl von Rädern oder Rollen aufweisen. Die Aufnahmeflächen können beispielsweise als Regale ausgebildet sein.

Bei diesem Stand der Technik ist ein Handhabungssystem vorgesehen, welches der Entnahme bzw. der Beladung dient, wobei das Fördergut entweder aus einem Regal in die Transporteinheit eingeladen oder aus der Transporteinheit entnommen und in das Regal eingelagert wird. Zu diesem Zweck ist das Handhabungssystem an der Transporteinheit angeordnet, so dass es nicht erforderlich ist Handhabungssysteme an jeder Belade- oder Entladestelle vorzuhalten. Jedoch ist ein solches Handhabungssystem konstruktiv aufwendig und verteuert damit entsprechende Transporteinheiten erheblich. Darüber hinaus ist ein solches Handhabungssystem aufwendig in der Wartung und störungsanfällig.

Aus diesem Stand der Technik ebenfalls bekannt ist ein Verfahren zum Be- und/oder Entladen einer Transporteinheit, bei dem eine Transporteinheit derart verfahren wird, dass das Handhabungssystem benachbart zu einer Empfangsvorrichtung (Regal) für das Fördergut und/oder benachbart zu einer Abgabevorrichtung von Fördergut angeordnet wird. Anschließend wird das Fördergut aus zumindest einer Aufnahmefläche der Transporteinheit mittels einer Handhabungseinheit des Handhabungssystems oder aus einer Abgabevorrichtung entnommen und entweder der Empfangsvorrichtung oder der Transporteinheit übergeben. Bei diesem Stand der Technik können die Regale in der Transporteinheit und in der Entnahme- bzw. Empfangsvorrichtung horizontal oder aus der Horizontalen schräg geneigt angeordnet sein.

Ausgehend von diesem Stand der Technik liegt der Erfindung die **Aufgabe** zugrunde, eine Transporteinheit anzugeben, die kostengünstig herstellbar ist und insbesondere einen schnellen und problemlosen Betrieb mit kurzen Entlade- und Beladezyklen ermöglicht und darüber hinaus einen großen Freiheitsgrad hinsichtlich eines autonomen Betriebs ermöglicht. Diese Aufgabenstellung wird mittels einer Transporteinheit nach Anspruch 1 gelöst. Es ist vorgesehen, dass die Aufnahmeelemente mit einer, eirne Bewegung des Förderguts bei einem Beladen oder einem Entladen der Aufnaheelemente unterstützenden Einrichtung ausgebildet sind und dass die Aufnahmeelemente gemeinsam über eine Verstellvorrichtung zwischen einer im Traggestell horizontalen Ausrichtung und einer von der horizontalen Ausrichtung abweichenden Belade- und/oder Entladestellung verstellbar sind.

Die erfindungsgemäße Transporteinheit hat den Vorteil, dass sie in einfacher Weise mit Fördergut, beispielsweise Transportboxen beladen bzw. entladen werden kann, indem die Aufnahmeelemente durch die Möglichkeit ihrer Schrägstellung und der das Beladen und das Entladen der Aufnahmeelemente unterstützende Einrichtung schnell und effektiv be- und entladen werden können. Diese Ausgestaltung hat auch den Vorteil, dass ein großer Freiheitsgrad des autonomen Betriebs erzielbar ist, da eine hohe Sicherheit bei dem Belade- bzw. Entladevorgang dadurch erzielt wird, dass die das Beladen und das Entladen der Aufnahmeelemente unterstützende Einrichtung eine sichere und genaue Positionierung entsprechend dem Bedarf auf den Aufnahmeelementen ermöglicht und darüber hinaus auch beim Entladen ein sicheres Entladen beispielsweise dadurch erzielt, dass die Aufnahmeelemente in eine Verschwenkstellung von bis zu 15° aus der horizontalen Ausrichtung der Aufnahmeelemente verschwenkt werden, so dass die auf den Aufnahmeelementen angeordneten Fördergüter mit hoher Sicherheit abrutschen. Es ist daher nicht notwendig, dass der Entladevorgang oder auch der Beladevorgang manuell überwacht und unterstützt wird.

Gemäß einer Weiterbildung der Erfindung ist vorgesehen, dass die, die Bewegung des Förderguts bei einem Beladen oder einem Entladen der Aufnahmeelemente unterstützende Einrichtung als eine Auflage aus mehreren Rollelementen, wie Walzen, Kugeln oder dergleichen, als eine Auflage mit mehreren Rollelementen, wie Walzen, Kugeln oder dergleichen und/oder als eine Auflage mit einer Reibung verringernden Beschichtung ausgebildet ist. Dem Grunde nach sind hier drei Möglichkeiten der Ausgestaltung der Erfindung angegeben. Zum einen können die Aufnahmeelemente ausschließlich aus Walzen oder Kugeln bestehen, auf denen das Fördergut aufliegt und über die das Fördergut an einer Entladestelle aufgrund der Drehbeweglichkeit dieser Elemente in einfacher und sicherer Weise abrutschen kann. Alternativ kann vorgesehen sein, dass entsprechende Walzen oder Kugeln in einem flächigen Aufnahmeelement angeordnet sind, so dass auch hier der voranstehend beschriebene Vorteil des sicheren Beladen bzw. Entladen erfüllt wird. Alternativ kann auch eine Reibung verringernde Beschichtung auf einer Auflage vorgesehen sein. Geeignet sind hier beispielsweise Beschichtungen aus Teflon oder dergleichen. In sämtlichen Ausgestaltungen ist es demzufolge nicht erforderlich, dass beispielsweise eine manuelle Tätigkeit für die Übergabe des Förderguts ausgeführt wird oder dass in den Transporteinheiten eine Ausschubmechanik vorgesehen ist, die die manuelle Tätigkeit ersetzen kann. Auch ist es nicht erforderlich, dass die Aufnahmeelemente in einen großen Winkel abweichend von der Horizontalen verschwenkt werden, um ein sicheres Ausgeben des Förderguts sicherzustellen. Hier sind bereits geringe Verschwenkwinkel, beispielsweise bis zu 15° gegenüber der Horizontalen ausreichend, um ein sicheres Ausgeben oder Aufnehmen des Förderguts zu ermöglichen. Durch die geringen Schwenkwinkel wird auch der Zeitbedarf für die Verschwenkung der Aufnahmeelemente aus der horizontalen in die geneigte Position geringer. Es kann somit eine schnelle Be- und Entladung vorgesehen sein, die die Fahrzyklen von Transporteinheiten erhöhen kann.

Erfindungsgemäß ist vorgesehen, dass jedes Aufnahmeelement an seinem parallel zu seiner Längsachse verlaufenden Kanten ein Riegelelement aufweist, das zwischen einer Riegelstellung und einer Entriegelungsstellung verstellbar ist, wobei das Fördergut bei in der Entriegelungsstellung stehendem Riegelelement durch die Schwerkraft aus dem Traggestell förderbar ist. Demnach können beispielsweise die Aufnahmeelemente schon vor Erreichen einer Entladestelle in die geneigte Stellung überführt werden, ohne dass die Gefahr besteht, dass das Fördergut aus den Aufnahmeelementen abrutscht. Bei Erreichen der Entladestelle wird dann das Riegelelement aus der Riegelstellung in die Entriegelungsstellung verstellt, so dass das Fördergut aus dem Aufnahmeelement abrutschen kann und der Entladestelle übergeben wird. Es ist auch denkbar, dass die Aufnahmeelemente mehrere Positionen zur Aufnahme von Fördergut aufweisen und dass jede Position ein Riegelelement aufweist, so dass auch in einer Entladestelle Teilentladungen durch Steuerungen der Riegelelemente möglich sind. Über die Riegelelemente können beispielsweise der Entladestelle zugewandte Positionen entladen werden, während weitere Positionen Riegelelemente aufweisen, die in verriegelter Stellung verbleiben, so dass die dort angeordneten Fördergüter nicht in die Entladestelle gelangen können. Diese Ausführung ermöglicht ferner, dass ein Transport auch bei geneigt stehenden Aufnahmeelementen ohne Gefahr des Ladungsverlustes möglich ist.

Die einzelnen Positionen können sowohl in Längsachsenrichtung der Transporteinheit als auch rechtwinklig dazu angeordnet sein, so dass mehrere Positionen in Längsachsenrichtung hintereinander als auch quer dazu ausgebildet sind.

Die Verstellvorrichtung ist vorzugsweise aus einer die Aufnahmeelemente verbindenden Koppelstange und einem Antrieb, insbesondere einem Linearmotor ausgebildet. Über die Koppelstange ist sichergestellt, dass sämtliche Aufnahmeelemente gleichzeitig über den Antrieb verstellt werden. Der Antrieb kann diesbezüglich an einem Aufnahmeelement angeordnet sein und dieses Aufnahmeelement aus der horizontalen Ausrichtung in eine von der horizontalen Ausrichtung abweichenden Belade- und/oder Entladestellung verstellen, wobei über die Koppelstange alle weiteren Aufnahmeelemente gleichlaufend bewegt werden. Vorzugsweise können auch zwei oder mehr Antriebe, insbesondere Linearmotoren vorgesehen sein, die insbesondere einen Transport von Fördergut mit höheren Gewichten, wie beispielsweise Maschinenteile ermöglichen, wobei hier gegebenenfalls eine höhere Antriebsleistung erforderlich ist, um die Aufnahmeelemente aus der, aus der horizontalen verschwenkten Position in die horizontale Ausrichtung zu verstellen, soweit diese Aufnahmeelemente mit Fördergut höheren Gewichts beladen sind.

Vorzugsweise besteht das Traggestell aus zwei beabstandet zueinander angeordneten und parallel verlaufenden Profilelementen. Die Profilelemente sind insbesondere mit einem C-förmigen Querschnitt ausgebildet und können zwischen dadurch gebildeten Schenkeln mit einem Abdeckelement verschlossen werden, so dass sich zwischen den Schenkeln und einem die Schenkel verbindenden Steg einerseits und dem Abdeckelement ein Hohlraum ausbildet, der zur Führung von Energie- und Datenleitungen geeignet ist. Es bildet sich demnach ein Kabelkanal aus. Die Profilelemente sind jeweils mit einem Ende mit dem Fahrgestell verbunden. Mit einem, dem Fahrgestell abgewandten Bereich sind die Profilelemente mit einem Rahmenelement verbunden, das beispielsweise zwei oder drei Längstraversen und zwei hierzu rechtwinklig angeordnete und die Längstraversen verbindenden Quertraversen ausgebildet ist. Ein derartiger Rahmen dient der Erhöhung der Stabilität des Traggestells. Ein derart stabiles Traggestell kann auch demontierbar von dem Fahrgestell ausgebildet sein, so dass unterschiedliche Traggestelle mit einem Fahrgestell verbindbar sind und somit die Variabilität der Transporteinheit erhöhen.

Die einzelnen Aufnahmeelemente sind zwischen den Profilelementen schwenkbeweglich angeordnet, wobei die Profilelemente beispielsweise über eine Drehachse miteinander in Längsachsenrichtung der Transporteinheit verbunden sind und an jede Drehachse ein Aufnahmeelement drehfest befestigt ist. Alternativ können natürlich auch Stummelachsen im Bereich der Profilelemente angeordnet sein, an denen die Aufnahmeelemente drehbeweglich angeordnet sind.

Es ist nach einer Weiterbildung der Erfindung vorgesehen, dass das Fahrgestell an seinen beiden quer zu einer möglichen Bewegungs- oder Fahrtrichtung verlaufenden Seiten Kupplungselemente aufweist, die zueinander kompatibel ausgebildet sind. Diese Kupplungselemente sind bevorzugt an Quertraversen befestigt und es besteht hierdurch die Möglichkeit, dass aus mehreren Transporteinheiten ein Routenzug, wie er ebenfalls Gegenstand der Erfindung ist, ausgebildet wird.

Wie bereits ausgeführt, weisen die Aufnahmeelemente mehrere Riegelelemente auf. Erfindungsgemäß sind an beiden Längskanten der Aufnahmeelemente jeweils mehrere Riegelelemente angeordnet. Unter den Längskanten sind die Kanten zu verstehen, die bei bestimmungsgemäßem Gebrauch der Transporteinrichtung parallel zur möglichen Bewegungs- oder Fahrtrichtung verlaufen. Diese Riegelelemente sind getrennt voneinander steuerbar, so dass beispielsweise auch eine Verstellung der Aufnahmeelemente aus der horizontalen Ausrichtung in eine hiervon abweichende Ausrichtung zu beiden Seiten der Transporteinheit möglich ist, so dass unterschiedliche Entladestellen beidseits einer Förderstrecke angefahren und beschickt werden können. Des Weiteren dienen die Riegelelemente natürlich auch dazu, dass bei einer Förderung mit horizontal ausgerichteten Aufnahmeelementen und die durch die Fahrbewegung gegebenenfalls entstehenden Vibrationen ein Abwerfen von Fördergut verhindert wird. Die voneinander getrennt steuerbaren Riegelelemente an einer Längskante eines Aufnahmeelements ermöglichen, dass Teilentladungen und auch Teilbeladungen an unterschiedlichen Entlade- bzw. Beladestellen erfolgen können, ohne darauf achten zu müssen, dass weitere Fördergüter dann nicht im Bereich eines Aufnahmeelements mit einer bestimmten Entladestelle angeordnet werden, soweit diese weiteren Fördergüter an anderer Stelle entladen werden sollen. Es kann auch vorgesehen sein, dass neben den an den Außenkanten eines Aufnahmeelements angeordneten Riegelelementen weitere Riegelelemente vorgesehen sind, die beispielsweise im Bereich der Mittellängsachse eines Aufnahmeelements verlaufend angeordnet sind und das Aufnahmeelement in eine linke und eine rechte Hälfte bezogen auf die Bewegungs- oder Fahrtrichtung der Transporteinheit unterteilen. Diese Bereiche können unterschiedlich beladen werden, so dass auch hier die Möglichkeit besteht, die Entladung an unterschiedlichen Entladestellen durch Steuerung der Riegelelemente gezielt vornehmen zu können.

Erfindungsgemäß sind die Aufnahmeelemente durch quer zur Längsachse ausgerichtete Trennelemente in Teilbereiche, insbesondere zur Aufnahme jeweils einer, einseitig offenen Box für Einzelteile ausgebildet. Hierbei werden die bereits voranstehend beschriebenen Positionen auf dem Aufnahmeelement ausgebildet, wobei jede Position zur Aufnahme zumindest einer einseitig offenen Box für Einzelteile vorgesehen sein kann.

Nach einem weiteren Merkmal der Erfindung ist vorgesehen, dass eine Arretiervorrichtung vorhanden ist, die die Aufnahmeelemente in einer horizontalen Ausrichtung zum Traggestell reib- und/oder formschlüssig arretiert. Eine solche Arretiervorrichtung kann insbesondere dann von Vorteil sein, wenn die die Aufnahmeelemente bezogen auf ihre Schwenkachse ungleich beladen werden oder durch Entladungen an unterschiedlichen Entladestellen durch auf den Aufnahmeelementen verbleibendes Fördergut Drehmomente um die Schwenkachse des Aufnahmeelements entstehen. Durch eine Arretierung wird somit die Transportsicherheit verbessert.

Schließlich ist bei einer Transporteinheit gemäß einer Weiterbildung vorgesehen, dass das Traggestell und/oder das Fahrgestell mit Sensoren ausgebildet ist, mit denen eine Position in einem Raum feststellbar ist und/oder über die Funktionen, beispielsweise in Abhängigkeit der Position aktivierbar und/oder deaktivierbar sind. Diese Ausgestaltung dient insbesondere der weitergehenden autonomen Arbeitsweise einer solchen Transporteinrichtung. Die Sensoren können hierbei kontaktlos oder aber auch kontaktbehaftet arbeiten und beispielsweise als Schalter ausgebildet sein. Solche Sensoren können im Bereich des, am oberen Ende des Traggestells angeordneten Rahmen angeordnet sein und beispielsweise in einer Belade- oder Entladestation durch das Einlaufen einer Transporteinrichtung in diese aktiviert werden. Durch die Aktivierung kann dann beispielsweise ein Verstellen der Aufnahmeelemente vorgenommen werden, so dass bei Erreichen der Endposition in der Entlade- oder Beladestation die Aufnahmeelemente bereits in der für die Beladung bzw. Entladung vorgesehene verschwenkte Stellung gebracht sind, so dass lediglich noch die Riegelelemente entsprechend der Steuerung in die entriegelte Stellung verfahren werden und das zu entladende Fördergut in die Entladestation rutscht bzw. das zu beladende Fördergut aus der Beladestation auf die Aufnahmeelemente rutscht. Anschließend werden die Riegelelemente wieder in die Verriegelungsstellung überführt und die Transporteinheit kann die Belade- bzw. Entladestelle verlassen und zu einer weiteren Belade- bzw. Entladestelle überführt werden.

Alternativ können hier auch Lichtschranken vorgesehen sein, die durch diese Sensoren ausgelöst werden. Auch kann es sich bei den Sensoren um Funkelemente handeln, die ein Funksignal aussenden, welches von einem Zentralempfänger empfangen wird und dahingehend ausgewertet werden kann, wo sich die Transporteinheit in einem Raum befindet, beispielsweise in welchem Bereich eine Transporteinheit fährt und welche Be- oder Entladestation als nächstes erreicht wird oder als letztes verlassen wurde.

Über den zentralen Empfänger können selbstverständlich auch funkbasierte Befehle an die Transporteinrichtung übermittelt werden, beispielsweise bestimmte Be- oder Entladestationen anzufahren und mit bestimmtem Fördergut zu bestücken oder bestimmtes Fördergut aufzunehmen.

Wie bereits voranstehend ausgeführt, können mehrere Transporteinheiten über lösbare Kupplungen miteinander zu einem Routenzug verbunden werden, der dann die Transportkapazität vergrößert.

Ebenfalls Gegenstand der Erfindung ist ein System zum Transport von Fördergut mit zumindest einer erfindungsgemäßen Transporteinheit nach der voranstehenden Beschreibung. Dieses System besteht aus einer Beladestation und einer Entladestation, wobei die Beladestation und/oder die Entladestation ein Traggestell mit mehreren, zumindest zwei lasttragfähigen Aufnahmeelementen für einzustellendes Fördergut aufweist, wobei die Aufnahmeelemente um eine Längsachse relativ zum Traggestell verstellbar angeordnet sind, wobei die Aufnahmeelemente mit einer, eine Bewegung des Förderguts bei einem Beladen oder einem Entladen der Aufnahmeelemente unterstützenden Einrichtung ausgebildet sind und wobei die Aufnahmeelemente gemeinsam über eine Verstellvorrichtung zwischen einer im Traggestell horizontalen Ausrichtung und einer von der horizontalen Ausrichtung abweichenden Belade- und/oder Entladestellung verstellbar sind.

Das erfindungsgemäße System weist somit neben zumindest einer erfindungsgemäßen Transporteinheit eine Beladestation und eine Entladestation auf. Die Entladestation kann beispielsweise in einer Fließbandproduktion ein bestimmter Standort sein, an dem bestimmte Bauteile für die Fertigung bereitgestellt werden. Anstelle von Bauteilen kann es sich auch um, insbesondere verschleißende Werkzeuge, wie Bohrspitzen, Schneid- oder Fräswerkzeuge handeln. Insoweit im Folgenden die Rede von Bauteilen ist werden damit auch Werkzeuge gemeint.

Um die Bauteile an die Entladestation zu transportieren, werden diese zentral in der Beladestation bereitgestellt und auf die Transporteinheit übergeben, die dann die Bauteile an die Entladestation fördert. Beladestation und Entladestation sind dabei dem Grunde nach entsprechend der Ausgestaltung der Transporteinheit ausgebildet, wobei jedoch das Fahrgestell nicht vorgesehen ist, da Beladestation und Entladestation ortsfest sind. In Übereinstimmung mit der Transporteinheit ist aber vorgesehen, dass sowohl Beladestation als auch Entladestation Aufnahmeelemente aufweisen, die um ihre Längsachse in einem Gestell verdrehbar gelagert sind, so dass auch hier eine leichte Übergabe des Transportguts von der Beladestation in die Transporteinheit bzw. von der Transporteinheit in die Entladestation möglich ist. In Übereinstimmung mit der Transporteinheit ist auch hier bei den Aufnahmeelementen vorgesehen, dass diese mit einer, eine Bewegung des Förderguts bei einem Beladen oder einem Entladen der Aufnahmeelemente unterstützenden Einrichtung ausgebildet sind.

Erreicht die Transporteinheit somit die Beladestation, so werden die Aufnahmeelemente in der Beladestation und in der Transporteinheit derart zueinander ausgerichtet, dass auf den Aufnahmeelementen der Beladestation befindliches Fördergut nach Verschwenken der Riegelelemente auf die Aufnahmeelemente der Transporteinheit überführt wird. Ist die Transporteinheit entsprechend beladen, werden die Aufnahmeelemente in die Horizontalstellung überführt und die Transporteinheit bewegt sich sodann in die Entladestelle, wo in gleicher Weise eine Verstellung der Aufnahmeelemente erfolgt, so dass das Fördergut nach Öffnen der Riegelelemente aus der Transporteinheit in die Entladestelle überführt wird. Es ist aber nicht zwingend erforderlich, dass die Aufnahmeelemente während der Fahrt in eine horizontale Ausrichtung gestellt werden. Durch die Riegelelemente ist durchaus auch ein Transport bei in Schrägstellung stehenden Aufnahmeelementen möglich. Hierzu sind die Riegelelemente entsprechend ausreichend zu dimensionieren bzw. auf die regelmäßig zu transportierenden Fördergüter auszurichten. Gleiches gilt auch für die Entladestation bzw. die Beladestation, da auch hier ein Bestücken der Beladestation, in der Regel manuell, auch dann möglich ist, wenn die Aufnahmeelemente sich in Schrägstellung befinden. Gleiches gilt in der Entladestation, insoweit auch hier die Riegelelemente ein Herausfallen des aufgegebenen Förderguts verhindern. Auch in der Entladestation erfolgt die Entnahme des Förderguts und das Verbringen an das Förderband beispielsweise manuell.

Das voranstehend beschriebene System ist aber durchaus auch im Bereich des Lebensmittelhandels denkbar, insoweit die Entladestation beispielsweise in einem Verkaufsraum auch das Warenangebot in Form von beispielsweise in offenen Transportkisten angebotenem Obst und/oder Gemüse darstellt. Insbesondere in zukünftigen Lebensmittelverkaufsstellen, die vollständig oder zumindest überwiegend mannlos zu betreiben sind, kann die Auffüllung von Regalen entsprechend erfolgen.

Nach einem weiteren Merkmal des erfindungsgemäßen Systems ist vorgesehen, dass die Beladestation und die Entladestation derart beabstandet zueinander angeordnet sind, dass eine Transporteinheit zwischen Beladestation und Entladestation verfahrbar ist und die Aufnahmeelemente der Beladestation, der Entladestation und der Transporteinheit in einer, aus der horizontalen Ausrichtung verkippten Stellung jeweils eine Ebene bilden, die eine Übergabe des Förderguts aus der Beladestation in die Transporteinheit und/oder aus der Transporteinheit in die Entladestation durch die Schwerkraft ermöglicht. Denkbar ist dem Grunde nach auch, dass in diesem Fall die Transporteinheit lediglich eine Verbindung zwischen der Belade- und der Entladestation darstellt, so dass Fördergut aus der Beladestation über die Transporteinheit direkt in die Entladestation überführt wird. Sinnvoll ist dieses System aber insbesondere dann, wenn auch noch ein Zwischentransport mittels der Transporteinheit erfolgt.

Weitere Merkmale und Vorteile der Erfindung ergeben sich aus der nachfolgenden Beschreibung der zugehörigen Zeichnungen. In der Zeichnung zeigen:
- Fig. 1: eine Transporteinheit in perspektivischer Ansicht;
- Fig. 2: ein Fahrgestell der Transporteinheit gemäß Fig. 1 in perspektivischer Ansicht;
- Fig. 3: eine Belade- und Entladestation eines Systems zur Nutzung der Transporteinheit gemäß Fig. 1,
- Fig. 4: die Transporteinheit gemäß Fig. 1 im Bereich einer nicht dargestellten Beladeund Entladestation;
- Fig. 5: die Transporteinheit gemäß Fig. 1 in einer Belade- und Entladestation gemäß Fig. 3 in perspektivischer Ansicht.

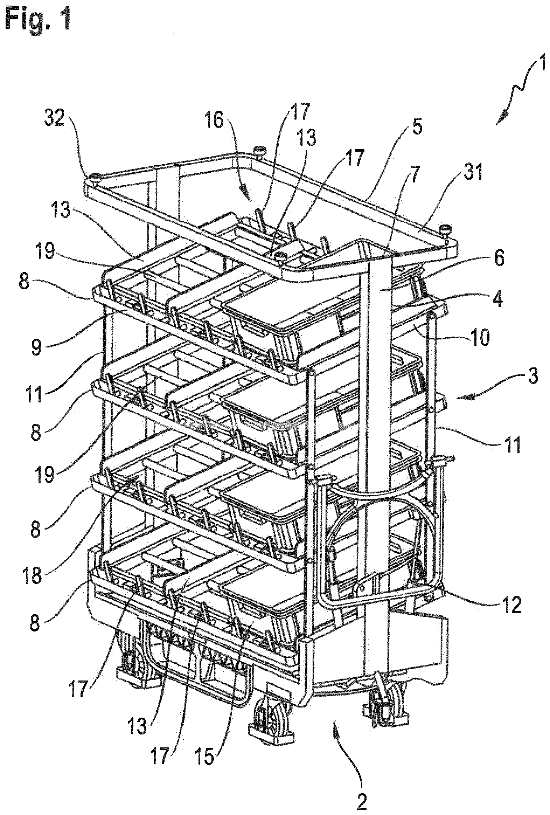

In der Fig. 1 ist eine Transporteinheit 1 dargestellt, die mit einem Fahrgestell 2 und einem Traggestell 3 ausgebildet ist, wobei das Traggestell 3 auf dem Fahrgestell 2 angeordnet ist.

Das Traggestell 3 besteht aus zwei im Querschnitt C-förmigen Profilen 4, die einen Endes mit dem Fahrgestell 2 verbunden sind. An dem, dem Fahrgestell 2 abgewandten Ende der Profile 4 ist ein Rahmenelement 5 mit den Profilen 4 verbunden.

Die Profile 4 weisen zwei parallel zueinander verlaufenden Schenkel und einen die Schenkel verbindenden Steg auf. Zwischen den freien Enden der Schenkel ist ein ebenfalls im Querschnitt C-förmig ausgebildetes Abdeckelement 6 angeordnet, welches zwischen die beiden Schenkel des Profils 4 einsteckbar ist und zusammen mit dem Profil 4 einen Kabelkanal 7 ausbildet, der der Aufnahme von Energie- und/oder Steuerleitungen für die nachfolgend noch zu beschreibende Antriebsmechanik aufnimmt.

Auf ihren aufeinander zu ausgerichteten Außenwandungen der Stege der Profile 4 sind nicht näher dargestellte Achsstummel angeordnet.

Des Weiteren zeigt Fig. 1 vier übereinander angeordnete, lasttragfähige Aufnahmeelemente 8. Jedes Aufnahmeelement 8 ist mit zwei parallel zueinander verlaufenden Längsträger und zwei, die Längsträger 9 verbindenden Querträger 10 ausgebildet. Die Querträger 10 sind mit den Profilen 4 im Bereich der Achsstummel verbunden, wobei die Aufnahmeelemente 8 um diese Achsstummel beschränkt schwenkbeweglich angeordnet sind.

Sämtliche Aufnahmeelemente 8 sind im Bereich der beiden Querträger 10 über Koppelstangen 11 verbunden. Ein unteres Aufnahmeelement 8 ist darüber hinaus mit einem Linearmotor 12 als Antrieb für die Verschwenkung der Aufnahmeelemente 8 verbunden. Bei dem Linearmotor 12 kann es sich um einen Hydraulikzylinder, einem Pneumatikzylinder oder auch um einen elektrisch angetriebenen Zylinder handeln, bei dem eine Kolbenstange aus einem Hohlzylinder ausgeschoben bzw. eingeschoben wird. Die Kolbenstange ist hierbei mit dem Aufnahmeelement 8 verbunden, während der Hohlzylinder, in dem die Kolbenstange geführt ist mit dem Fahrgestell 2 verbunden ist.

Jedes Aufnahmeelement 8 ist durch Trennelemente 13 in mehrere Teilbereiche 14 unterteilt, wobei die Trennelemente 13 parallel zu den Querträgern 10 verlaufend ausgerichtet sind und jeweils ein Teilbereich 14 zur Aufnahme eines Förderguts 15, beispielsweise in Form einer einseitig offenen Box vorgesehen ist.

Des Weiteren weist jedes Aufnahmeelement 8 ein Riegelelement 16 für jeden Teilbereich 14 an jeder im Bereich des Längsträgers 9 angeordneten Seite des Aufnahmeelements 8 auf. Jedes Riegelelement 16 besteht aus zwei stabförmigen Zungen 17, die gemeinsam aus einer in Fig. 1 dargestellten Riegelstellung in eine Entriegelungsstellung verstellbar sind, wobei die nicht dargestellte Entriegelungsstellung vorsieht, dass die Zungen 17 parallel zu den Längsträgern 9 verlaufend ausgerichtet sind, während die Zungen 17 in der dargestellten Riegelstellung mit ihrer Längsachse rechtwinklig zur Längsachse der Längsträger 9 verlaufend angeordnet sind. Die Zungen 17 sind derart ausgebildet, dass das Fördergut 15 bei der in Fig. 1 dargestellten Stellung der Aufnahmeelemente 8 an den Zungen 17 anliegen und derart vor einem Abrutschen aus dem Aufnahmeelement 8 geschützt ist.

Jedes Aufnahmeelement 8 weist eine, eine Bewegung des Förderguts 15 beim Beladen oder beim Entladen der Aufnahmeelemente 8 unterstützende Einrichtung 18 auf, die aus drei in gleichmäßigen Abständen zueinander ausgerichteten und parallel zu den Längsträgern 9 verlaufenden Rollelementen 19 ausgebildet sind. Die Rollelemente 19 sind verdrehbar zwischen den Trennelementen 13 des Aufnahmeelements 8 angeordnet und stellen somit eine unterbrochene Aufnahmefläche für das Fördergut 15 dar.

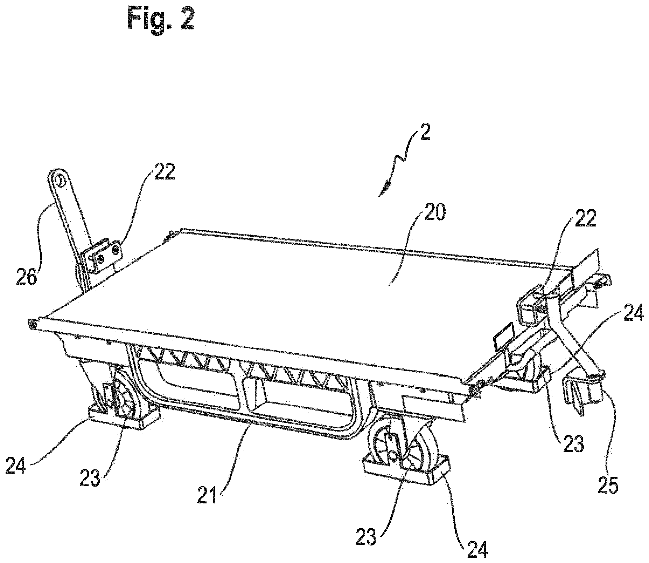

Das Fahrgestell 2, welches in Fig. 2 detailliert dargestellt ist, besteht aus einer Bodenplatte 20, die an ihrer Unterseite zwei Rahmenelemente 21 aufweist, wobei im Bereich der Stirnseiten der Bodenplatten 20 U-förmige Aufnahmen 22 angeordnet sind, in die die Profile 4 des Traggestells 3 einsteckbar sind. Die Profile 4 sind mit den Aufnahmen 22 verschraubt, so dass das Traggestell 3 insgesamt in einfacher Weise vom Fahrgestell 2 gelöst werden kann.

Des Weiteren ist erkennbar, dass das Fahrgestell 2 in jedem Eckbereich ein Rad 23 aufweist, das in einer relativ zur Bodenplatte 20 verschwenkbaren Radhalterung 24 drehbar gelagert ist.

Im Bereich der Stirnseiten weist die Bodenplatte 20 des Weiteren Kupplungselemente 25 und 26 auf, die derart kompatibel ausgebildet sind, dass mehrere Transporteinheiten gemäß Fig. 1 zu einem Routenzug zusammengestellt und miteinander verbunden werden können.

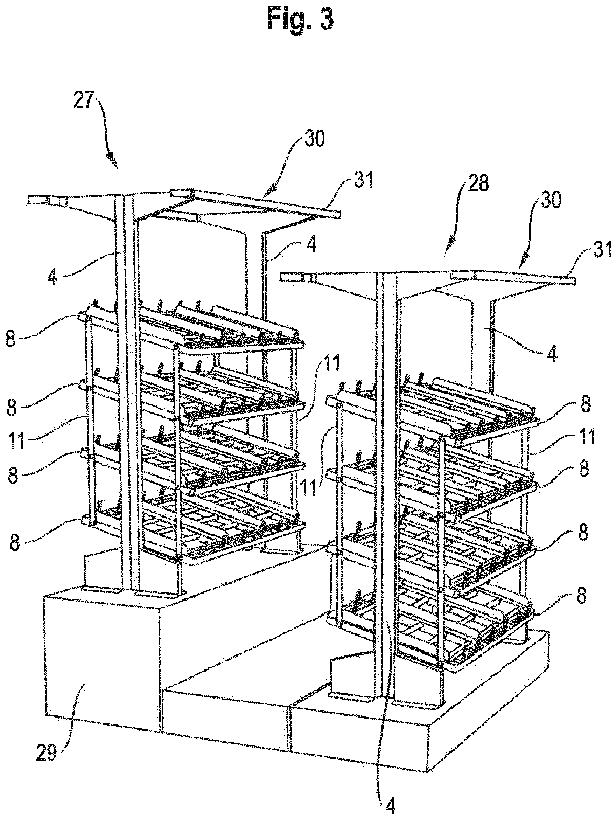

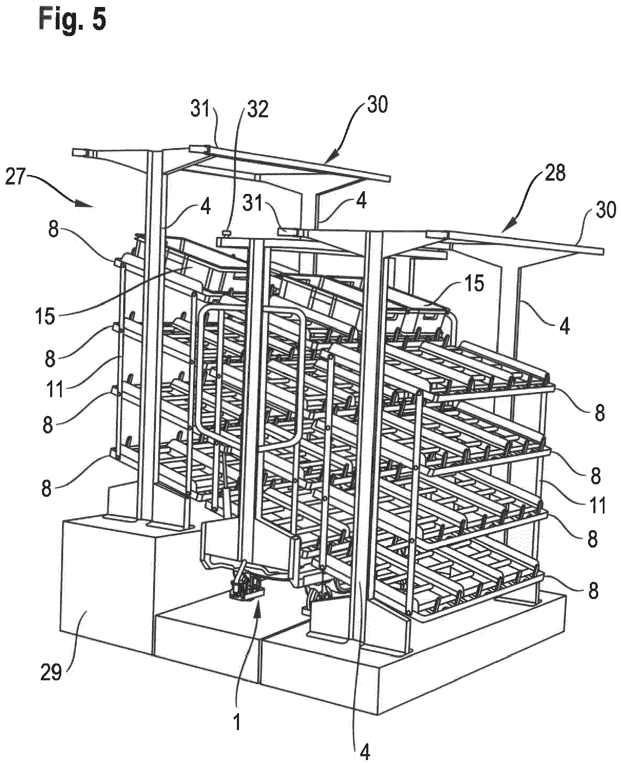

In den Fign. 3 und 5 sind eine Beladestation 27 und eine Entladestation 28 dargestellt, die konstruktiv identisch ausgebildet sind. Dem Grunde nach entspricht die konstruktive Ausgestaltung der Beladestation 27 und der Entladestation 28 dem Traggestell 3 mit den Aufnahmeelementen 8, die auch in der Beladestation 27 und der Entladestation 28 erkennbar sind.

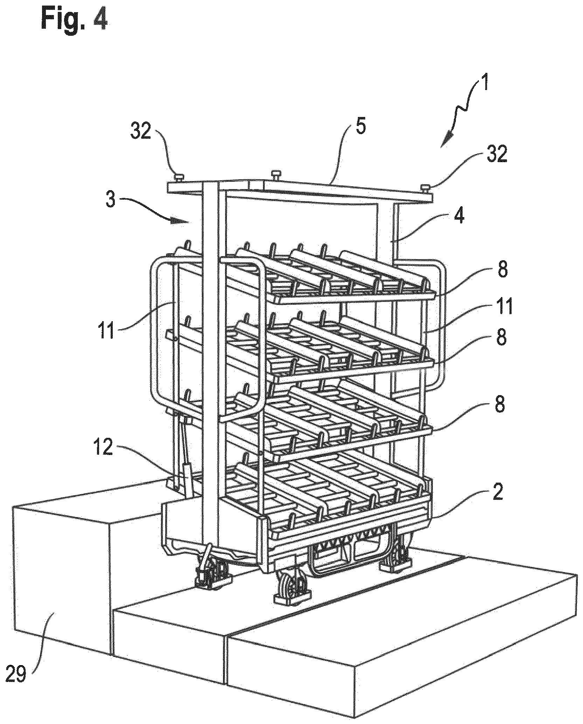

Auch in der Beladestation 27 und der Entladestation 28 sind die Aufnahmeelemente 8 beschränkt verschwenkbar zwischen zwei Profilen 4 angeordnet und über Koppelstangen 11 miteinander verbunden, so dass die Schwenkbewegung sämtlicher Aufnahmeelemente 8 in der Beladestation 27 gleichlaufend ist, wie auch in der Entladestation 28. Erkennbar ist, dass bei der Ausgestaltung gemäß Fig. 3 die Beladestation 27 auf einem höheren Podest 29 angeordnet ist. Diesbezüglich zeigt die Fig. 4 die Transporteinheit 1 in einer Anordnung vor dem Podest 29, dass in Fig. 4 ohne die Beladestation 27 dargestellt ist.

In Fig. 5 sind die Beladestation 27, die Entladestation 28, das Podest 29 und die zwischen der Beladestation 27 und der Entladestation 28 angeordnete Transporteinheit 1 zu erkennen. Erkennbar bildet beispielsweise das obere Aufnahmeelement 8 in der Beladestation 27, das obere Aufnahmeelement 8 der Transporteinheit 1 und das obere Aufnahmeelement der Entladestation 28 eine Ebene, die dazu genutzt werden kann, das Fördergut von der Beladestation 27 in die Transporteinheit 1 einläuft bzw. von der Transporteinheit 1 in die Entladestation 28 übergeben wird. Die Transporteinheit 1 kann in diesem Fall auch ausschließlich als Fördermittel dienen, um Fördergut 15 von der Beladestation 27 in die Entladestation 28 zu überführen. Eine solche Verwendung kann in einem Supermarkt von Interesse sein, um beispielsweise in der Beladestation 27 bevorratete Waren in die Entladestation 28 zu überführen, die in diesem Fall eine Verkaufsstation darstellt, die von Kunden leicht erreichbar ist. Die Transporteinheit kann dann dazu genutzt werden in mehreren Einheiten aus Beladestation 27 und Entladestation 28 den Nachschub der Waren in den für Kunden erreichbaren Bereich der Verkaufsstationen zu ermöglichen.

Erfindungsgemäß wird die Schwerkraft für die Beladung und Entladung genutzt und die Förderung wird durch die Einrichtung 18 unterstützt, so dass eine Schrägstellung der Aufnahmeelemente 8 von maximal 15° bezogen auf die Horizontale ausreicht, um eine sichere Überführung des Förderguts 15, beispielsweise in Form von Boxen aus der Beladestation 27 in die Transporteinheit 1 und/oder von der Transporteinheit 1 in die Entladestation 28 sicherstellt. Bei der Handhabung des in den Fign. 3 bis 5 dargestellten Systems werden die Riegelelemente 16 der Beladestation 27, der Entladestation 28 und der Transporteinheit 1 in Abhängigkeit des Be- oder Entladevorgangs angesteuert, so dass beispielsweise eine in Fig. 5 in der Beladestation 27 in einem Teilbereich 14 angeordnete Box als Fördergut 15 nach Verschwenken der dortigen Zungen 17 aus der Beladestation 27 in die Transporteinheit 1 rutscht und von den dortigen Zungen 17 an einer Weiterbewegung in Richtung der Entladestation 28 gehindert wird.

Andererseits sind in Fig. 5 zwei Fördergüter 15 im Bereich des obersten Aufnahmeelements 8 der Transporteinheit 1 dargestellt, die gemeinsam oder getrennt voneinander durch Betätigung der Zungen 17 in diesem Bereich der Transporteinheit 1 in die Entladestation 28 übergeben werden können.

Erkennbar weisen die Beladestation 27 und die Entladestation 28 in Entsprechung des Rahmenelements 5 ebenfalls ein Rahmenelement 30 am oberen Ende der Profile 4 auf, wobei jedes Rahmenelement 30 einen in Längsachsenrichtung verlaufenden Träger 31 hat, der eine zur Transporteinheit 1 ausgerichtete Führungsfläche aufweist. Die Führungsfläche tritt bei einfahrender Transporteinheit 1 mit Sensoren 32 in Kontakt, die in den Eckbereichen des Rahmenelements 5 der Transporteinheit 1 angeordnet sind. Über die Sensoren 32 kann somit zum einen die Führung der Transporteinheit im Bereich einer Beladestation 27 oder Entladestation 28 erfolgen und andererseits können über die Sensoren 32 Daten über die Positionierung der Transporteinheit 1 relativ zur Beladestation 27 oder zur Entladestation 28 aufgenommen werden, die sodann für die Steuerung der Transporteinheit 1 und deren Aufnahmeelemente 8 genutzt werden.

Erreicht beispielsweise eine Transporteinheit 1 eine Beladestation 27 oder eine Entladestation 28 und wird hierdurch ein Sensor 32 aktiviert, so können bereits während des Einlaufs der Transporteinheit 1 die Aufnahmeelemente 8 der Transporteinheit 1 in die vorgesehene Schrägstellung verkippt werden, so dass bei Erreichen der Endstellung der Transporteinheit 1 relativ zur Beladestation 27 bzw. der Entladestation 28 die Riegelelemente 16 geöffnet werden und die Fördergüter 15 dann von der Transporteinheit 1 in die Entladestation 28 übergeben oder von der Beladestation 27 in die Transporteinheit 1 aufgenommen werden. Hierdurch lassen sich wesentlich kürzere Verweilzeiten der Transporteinheit 1 im Bereich der Beladestation 27 bzw. der Entladestation 28 erzielen, so dass die Effektivität eines erfindungsgemäßen Systems deutlich verbessert ist.

Es ist nicht erforderlich, dass Beladestation 27 und Entladestation 28 in der Art und Weise angeordnet sind, wie es die Fign. 3 und 5 zeigen. Vielmehr kann die Beladestation 27 getrennt von der Entladestation 28 angeordnet sein, so dass zwischen Beladestation 27 und Entladestation 28 ein Fahrweg ausgebildet ist, auf dem die Transporteinheit 1 im Sinne eines Flurförderfahrzeugs bewegt wird.

Darüber hinaus ist es bei der Ausgestaltung der Erfindung auch nicht erforderlich, dass die Aufnahmeelemente 8 im Bereich der Beladestation 27 bzw. der Entladestation 28 über einen Antrieb verstellbar sind. Wichtig ist hierbei lediglich, dass die Aufnahmeelemente 8 der Beladestation 27 und der Entladestation 28 in Kombination mit den Aufnahmeelementen 8 der Transporteinheit 1 zum Entlade- bzw. Beladevorgang in einer Ebene angeordnet sind, die einen reibungslose Übergabe von Ladegut ermöglicht. Des Weiteren muss sichergestellt werden, dass der Abstand zwischen der Transporteinheit 1 und der Beladestation 27 bzw. der Entladestation 28 im System derart ausgestaltet ist, dass eine problemlose Übergabe des Förderguts 15 gegeben ist. Zu diesem Zweck ist der Abstand zwischen der Transporteinheit 1, insbesondere den Längsträgern 9 der Aufnahmeelemente 8 und den Längsträgern der Aufnahmeelemente 8 im Bereich der Entladestation 28 bzw. der Beladestation 27 möglichst klein zu halten.

Die Ausgestaltung der Entladestation 28 bzw. der Beladestation 27 mit verschwenkbaren Aufnahmeelementen 8 hat aber darüber hinaus Vorteile, da insoweit eine Beladestation 27 auch als Entladestation 28 eingesetzt werden kann und umgekehrt. Durch die übereinstimmende konstruktive Ausgestaltung der Beladestation 27 und der Entladestation 28 ist eine multifunktionale Anwendung von gleichen Teilen möglich.

Die Erfindung ist nicht auf die beschriebenen Merkmale beschränkt, sondern wird durch die Ansprüche definiert. Die erfindungsgemäße Wirkung kann auch durch geringfügige Abweichungen in erfindungsgemäßer Weise erzielt werden, sofern hierbei nicht der Schutzbereich der nachstehenden Ansprüche verlassen wird. Beispielsweise kann als Einrichtung 18 auch ein Tablar vorgesehen sein, welches auf seiner Unterseite mit einer reibmindernden Beschichtung ausgebildet ist, die es ermöglicht, dass das Tablar über die Aufnahmeelemente 8 abrutscht, während die Oberseite des Tablars, welche dem aufzunehmenden Fördergut zugewandt ist, eine rutschfeste Beschichtung aufweist, so dass ein vom Tablar aufgenommenes Fördergut 15, beispielsweise ein Stückgut im Transportfall nicht verrutschen kann.

Die Sensoren 32 können unterschiedlich ausgebildet sein. So können beispielsweise Raum scannende Sensoren verwendet werden, ebenso wie aber auch Lichtschranken, in die hineinverfahren werden kann. Zudem ist nicht nur ein sensorisches Abtasten möglich, auch mechanische Positionierhilfen sind denkbar, wie beispielsweise Schalter, gegen die die Transporteinheit 1 fährt und somit schaltet. Es können auch Kombinationen vorgesehen sein.

### Bezugszeichen

- 1: Transporteinheit
- 2: Fahrgestell
- 3: Traggestell
- 4: Profil
- 5: Rahmenelement
- 6: Abdeckelement
- 7: Kabelkanal
- 8: Aufnahmeelement
- 9: Längsträger
- 10: Querträger
- 11: Koppelstange
- 12: Linearmotor
- 13: Trennelement
- 14: Teilbereich
- 15: Fördergut
- 16: Riegelelement
- 17: Zunge
- 18: Einrichtung
- 19: Rollelement
- 20: Bodenplatte
- 21: Rahmenelement
- 22: Aufnahme
- 23: Rad
- 24: Radhalterung
- 25: Kupplungselement
- 26: Kupplungselement
- 27: Beladestation
- 28: Entladestation
- 29: Podest
- 30: Rahmenelement
- 31: Träger
- 32: Sensor

## Patentansprüche

1. Transporteinheit mit einem Fahrgestell (2), auf dem ein Traggestell (3) mit mehreren, zumindest zwei übereinander angeordneten, lasttragfähigen Aufnahmeelementen (8) für zu transportierendes Fördergut (15) angeordnet ist, wobei die Aufnahmeelemente (8) um eine Längsachse relativ zum Traggestell (3) verstellbar angeordnet sind, wobei die Aufnahmeelemente (8) mit einer, eine Bewegung des Förderguts (15) bei einem Beladen oder einem Entladen der Aufnahmeelemente (8) unterstützenden Einrichtung (18) ausgebildet sind,
wobei die Aufnahmeelemente (8) gemeinsam über eine Verstellvorrichtung zwischen einer im Traggestell (3) horizontalen Ausrichtung und einer von der horizontalen Ausrichtung abweichenden Belade- und/oder Entladestellung verstellbar sind, **dadurch gekennzeichnet, dass** jedes Aufnahmeelement (8) an seinen parallel zu seiner Längsachse verlaufenden Kanten Riegelelemente (16) aufweist, die zwischen einer Riegelstellung und einer Entriegelungsstellung verstellbar sind, wobei das Fördergut (15) bei in der Entriegelungsstellung stehendem Riegelelement (16) durch die Schwerkraft aus dem Traggestell (3) förderbar ist, und dass die Aufnahmeelemente (8) durch quer zur Längsachse ausgerichtete Trennelemente (13) in Teilbereiche (14) ausgebildet sind, wobei jeder Teilbereich (14) ein Riegelelement (16) aufweist, die getrennt voneinander steuerbar sind.

2. Transporteinrichtung nach Anspruch 1,
**dadurch gekennzeichnet,**
**dass** die, die Bewegung des Förderguts (15) bei einem Beladen oder einem Entladen der Aufnahmeelemente (8) unterstützende Einrichtung (18) als eine Auflage aus mehreren Rollelementen (19), wie Walzen, Kugeln oder dergleichen, als eine Auflage mit mehreren Rollelementen (19), wie Walzen, Kugeln oder dergleichen und/oder als eine Auflage mit einer Reibung verringernden Beschichtung ausgebildet ist.

3. Transporteinheit nach einem der Ansprüche 1 oder 2,
**dadurch gekennzeichnet,**
**dass** die Verstellvorrichtung aus einer die Aufnahmeelemente (8) verbindenden Koppelstange (11) und einem Antrieb, insbesondere einem Linearmotor (12) ausgebildet ist.

4. Transporteinheit nach einem der Ansprüche 1 bis 3,
**dadurch gekennzeichnet,**
**dass** das Traggestell (3) aus zwei beabstandet zueinander angeordneten und parallel verlaufenden Profilelementen (4) besteht, die jeweils mit einem Ende mit dem Fahrgestell (2) verbunden sind und in einem, dem Fahrgestell (2) abgewandten Bereich, beispielsweise an ihren, dem Fahrgestell (2) abgewandten Enden über ein Rahmenelement (5) verbunden sind, wobei die Aufnahmeelemente (8) zwischen den Profilelementen (4) angeordnet sind.

5. Transporteinheit nach einem der Ansprüche 1 bis 4,
**dadurch gekennzeichnet,**
**dass** das Fahrgestell (2) an seinen beiden quer zu einer möglichen Bewegungs- oder Fahrtrichtung verlaufenden Seiten Kupplungselemente (25, 26) aufweist, die zueinander kompatibel ausgebildet sind.

6. Transporteinheit nach einem der Ansprüche 1 bis 5,
**dadurch gekennzeichnet,**
**dass** eine Arretiervorrichtung vorgesehen ist, die die Aufnahmeelemente (8) in einer horizontalen Ausrichtung zum Traggestell (3) reib- und/oder formschlüssig arretiert.

7. Transporteinheit nach einem der Ansprüche 1 bis 6,
**dadurch gekennzeichnet,**
**dass** das Traggestell (3) und/oder das Fahrgestell (2) mit Sensoren (32) ausgebildet ist, mit denen eine Position in einem Raum feststellbar ist und/oder über die Funktionen beispielsweise in Abhängigkeit der Position aktivier- und/oder deaktivierbar sind.

8. Routenzug mit mehreren Transporteinheiten (1), wobei zumindest eine Transporteinheit (1) nach einem der Ansprüche 1 bis 7 ausgebildet ist und wobei die Transporteinheiten (1) über lösbare Kupplungen (25, 26) miteinander verbunden sind.

9. System zum Transport von Fördergut (15) mit zumindest einer Transporteinheit (1) nach einem der Ansprüche 1 bis 7 oder mit einem Routenzug nach Anspruch 8, bestehend aus einer Beladestation (27) und einer Entladestation (28), wobei die Beladestation (27) und/oder der Entladestation (28) ein Traggestell (1) mit mehreren, zumindest zwei lasttragfähigen Aufnahmeelementen (8) für einzustellendes Fördergut (15) aufweist, wobei die Aufnahmeelemente (8) mit einer, eine Bewegung des Förderguts (15) bei einem Beladen oder einem Entladen der Aufnahmeelemente (8) unterstützenden Einrichtung (18) ausgebildet sind und wobei vorzugsweise die Aufnahmeelemente (8) gemeinsam über eine Verstellvorrichtung zwischen einer im Traggestell (3) horizontalen Ausrichtung und einer von der horizontalen Ausrichtung abweichenden Belade- und/oder Entladestellung verstellbar sind.

10. System nach Anspruch 9,
**dadurch gekennzeichnet,**
**dass** die Beladestation (27) und die Entladestation (28) derart beabstandet zueinander angeordnet sind, dass eine Transporteinheit (1) zwischen Beladestation (27) und Entladestation (28) verfahrbar ist und die Aufnahmeelemente (8) der Beladestation (27), der Entladestation (28) und der Transporteinheit (1) in einer aus der horizontalen Ausrichtung verkippten Stellung jeweils eine Ebene bilden, die eine Übergabe des Förderguts (15) aus der Beladestation (27) in die Transporteinheit (1) und/oder aus der Transporteinheit (1) in die Entladestation (28) durch die Schwerkraft ermöglicht.

## Claims

1. Transport unit with a chassis (2) on which is arranged a support frame (3) with several load-bearing receiving elements (8), arranged one above the other, for articles to be transported (15), wherein the receiving elements (8) are arranged so as to be adjustable about a longitudinal axis relative to the support frame (3), wherein the receiving elements (8) are designed with a device (18) supporting a movement of the articles to be transported (15) during loading or unloading of the receiving elements (8), wherein the receiving elements (8) are jointly adjustable via an adjusting device between a horizontal alignment in the support frame (3) and a loading and/or unloading position deviating from the horizontal alignment, **characterized in that**
each receiving element (8) has locking elements (16) on its edges extending parallel to its longitudinal axis, which locking elements can be adjusted between a locking position and an unlocking position, wherein it is possible for the articles to be transported (15) to be conveyed out of the support frame (3) by gravity when the locking element (16) is in the unlocking position, and **in that** the receiving elements (8) are formed into subsections (14) by separating elements (13) aligned transversely to the longitudinal axis, each subsection (14) having a locking element (16) which can be controlled separately from one another

2. Transport unit according to claim 1,
**characterized in that**
that the device (18) supporting the movement of the articles to be transported (15) during loading or unloading of the receiving elements (8) is designed as a support consisting of a plurality of roller elements (19), such as rollers, balls or the like, as a support with a plurality of roller elements (19), such as rollers, balls or the like and/or as a support with a friction-reducing coating.

3. Transport unit according to any one of claims 1 or 2,
**characterized in**
**that** the adjusting device is formed from a coupling rod (11) connecting the receiving elements (8) and a drive device, in particular a linear motor (12).

4. Transport unit according to any one of claims 1 to 3,
**characterized in that**
the support frame (3) consists of two spaced-apart and parallel profile elements (4), which are each connected at one end to the chassis (2) and are connected via a frame member (5) in a region facing away from the chassis (2), for example at their ends facing away from the chassis (2), the receiving elements (8) being arranged between the profile elements (4).

5. Transport unit according to any one of claims 1 to 4,
**characterized in that**
the chassis (2) has coupling elements (25, 26) on its two sides extending transversely to a possible direction of movement or travel, which coupling elements are designed to be compatible with one another.

6. Transport unit according to any one of claims 1 to 5,
**characterized in that**
a locking device is provided which frictionally and/or positively locks the receiving elements (8) in a horizontal alignment to the support frame (3)

7. Transport unit according to any one of claims 1 to 6,
**characterized in that**
the support frame (3) and/or the chassis (2) is designed with sensors (32) with which a position in a space can be determined and/or via which functions can be activated and/or deactivated, for example depending on the position.

8. Route train comprising a plurality of transport units (1), wherein at least one transport unit (1) is designed according to any one of claims 1 to 7 and wherein the transport units (1) are connected to one another via detachable couplings (25, 26).

9. System for transporting articles (15) with at least one transport unit (1) according to any one of claims 1 to 7 or with a route train according to claim 8, consisting of a loading station (27) and an unloading station (28), wherein the loading station (27) and/or the unloading station (28) have a support frame (1) with several, at least two, load-bearing receiving elements (8) for articles to be transported (15) to be placed therein, wherein the receiving elements (8) are configured with a device (18) supporting a movement of the articles to be transported (15) during loading or unloading of the receiving elements (8) and wherein preferably the receiving elements (8) are jointly adjustable via an adjusting device between a horizontal alignment in the support frame (3) and a loading and/or unloading position deviating from the horizontal alignment.

10. System according to claim 9,
**characterized in that**
the loading station (27) and the unloading station (28) are arranged at a distance from one another in such a way that a transport unit (1) can be moved between the loading station (27) and the unloading station (28), and the receiving elements (8) of the loading station (27), the unloading station (28) and the transport unit (1) in a position tilted out of the horizontal alignment each form a plane which enables transfer of the articles to be transported (15) from the loading station (27) into the transport unit (1) and/or from the transport unit (1) into the unloading station (28) by the force of gravity.

## Revendications

1. Unité de transport avec un châssis (2) sur lequel est disposé un cadre de support (3) avec plusieurs éléments de réception porteurs (8), disposés les uns au-dessus des autres, pour des produits à transporter (15), dans lequel les éléments de réception (8) sont disposés de manière à être réglables autour d'un axe longitudinal par rapport au cadre de support (3), dans lequel les éléments de réception (8) sont conçus avec un dispositif (18) supportant un mouvement des produits à transporter (15) pendant le chargement ou le déchargement des éléments de réception (8), dans lequel les éléments de réception (8) sont réglables conjointement par l'intermédiaire d'un dispositif de réglage entre un alignement horizontal dans le cadre de support (3) et une position de chargement et/ou de déchargement s'écartant de l'alignement horizontal,
**caractérisée en ce que**
chaque élément de réception (8) comporte des éléments de verrouillage (16) sur ses bords s'étendant parallèlement à son axe longitudinal, ces éléments de verrouillage pouvant être réglés entre une position de verrouillage et une position de déverrouillage, ce qui permet aux articles à transporter (15) d'être transportés hors du cadre de support (3) par gravité lorsque l'élément de verrouillage (16) est dans la position de déverrouillage, et **en ce que** les éléments de réception (8) sont formés en sous-sections (14) par des éléments de séparation (13) alignés transversalement à l'axe longitudinal, chaque sous-section (14) ayant un élément de verrouillage (16) qui peut être commandé séparément l'un de l'autre.

2. Unité de transport selon la revendication 1,
**caractérisée en ce que**
le dispositif (18) supportant le mouvement des articles à transporter (15) pendant le chargement ou le déchargement des éléments récepteurs (8) est conçu comme un support composé de plusieurs éléments à rouleaux (19), tels que des rouleaux, des billes ou similaires, comme un support avec plusieurs éléments à rouleaux (19), tels que des rouleaux, des billes ou similaires et/ou comme un support avec un revêtement réduisant les frottements.

3. Unité de transport selon l'une quelconque des revendications 1 ou 2, **caractérisée en ce que**
le dispositif de réglage est constitué d'une tige d'accouplement (11) reliant les éléments de réception (8) et un dispositif d'entraînement, en particulier un moteur linéaire (12).

4. Unité de transport selon l'une quelconque des revendications 1 à 3,
**caractérisée en ce que**
le cadre de support (3) est constitué de deux éléments profilés (4) espacés et parallèles, qui sont chacun reliés à une extrémité au châssis (2) et sont reliés par l'intermédiaire d'un élément de cadre (5) dans une zone opposée au châssis (2), par exemple à leurs extrémités opposées au châssis (2), les éléments de réception (8) étant disposés entre les éléments profilés (4).

5. Unité de transport selon l'une quelconque des revendications 1 à 4,
**caractérisée en ce que**
le châssis (2) comporte sur ses deux côtés s'étendant transversalement à une direction possible de mouvement ou de déplacement des éléments d'accouplement (25, 26), ces éléments d'accouplement étant conçus pour être compatibles l'un avec l'autre.

6. Unité de transport selon l'une quelconque des revendications 1 à 5,
**caractérisée en ce que**
un dispositif de verrouillage est prévu pour bloquer par friction et/ou positivement les éléments de réception (8) dans un alignement horizontal par rapport au cadre de support (3).

7. Unité de transport selon l'une quelconque des revendications 1 à 6,
**caractérisée en ce que**
le cadre de support (3) et/ou le châssis (2) est équipé de capteurs (32) permettant de déterminer une position dans un espace et/ou d'activer et/ou de désactiver des fonctions, par exemple dépendant de la position.

8. Train de route comprenant plusieurs unités de transport (1), dans lequel au moins une unité de transport (1) est conçue selon l'une quelconque des revendications 1 à 7 et dans lequel les unités de transport (1) sont reliées les unes aux autres par des éléments d'accouplement amovibles (25, 26).

9. Système de transport de produits (15) avec au moins une unité de transport (1) selon l'une quelconque des revendications 1 à 7 ou avec un train de route selon la revendication 8, composé d'une station de chargement (27) et d'une station de déchargement (28), dans lequel la station de chargement (27) et/ou la station de déchargement (28) ont un cadre de support (1) avec plusieurs, au moins deux, éléments de réception porteurs (8) pour les produits à transporter (15) à placer dans les mêmes, dans lequel les éléments de réception (8) sont configurés avec un dispositif (18) supportant un mouvement des articles à transporter (15) pendant le chargement ou le déchargement des éléments de réception (8) et dans lequel, de préférence, les éléments de réception (8) sont réglables conjointement via un dispositif de réglage entre un alignement horizontal dans le cadre de support (3) et une position de chargement et/ou de déchargement s'écartant de l'alignement horizontal.

10. Système selon la revendication 9,
**caractérisé en ce que**
la station de chargement (27) et la station de déchargement (28) sont disposées à une certaine distance l'une de l'autre de manière à ce qu'une unité de transport (1) puisse être déplacée entre la station de chargement (27) et la station de déchargement (28), et les éléments de réception (8) de la station de chargement (27), de la station de déchargement (28) et de l'unité de transport (1) en position inclinée par rapport à l'alignement horizontal forment chacun un plan qui permet le transfert des produits à transporter (15) de la station de chargement (27) à l'unité de transport (1) et/ou de l'unité de transport (1) à la station de déchargement (28) par la force de gravité.
